# EUROPEAN PATENT SPECIFICATION

(11) **EP 3 812 207 B1**
(45) Date of publication and mention of the grant of the patent: **23.08.2023**
(21) Application number: 19204305.7
(22) Date of filing: 21.10.2019
(51) Int. Cl.: B60N 2/66, B60N 2/02

(54) **SUSPENSION MAT ADJUSTING DEVICE**
VERSTELLVORRICHTUNG FÜR EINE AUFHÄNGUNGSMATTE
DISPOSITIF DE RÉGLAGE DE TAPIS DE SUSPENSION

(43) Date of publication of application: 28.04.2021
(73) Proprietor: FICO CABLES LDA, 4470-263 Vermoim-Maia (PT)
(72) Inventor: DE CASTRO FARIA, Manuel António, 4470-263 Vermoim-Maia (PT); GONCALVES SILVA, David Manuel, 4470-263 Vermoim-Maia (PT)
(74) Representative: Mader, Joachim

(56) References cited:
- US-A- 3 186 251
- US-B2- 7 770 972

## Description

### Field of the invention

The present invention relates to a suspension mat adjusting device for actuating an actuation zone of a suspension mat preferably of a backrest of a vehicle seat. The suspension mat is particularly installed in a seat of a motor vehicle, like a passenger car and can be adjusted to change its shape, particularly in the lumbar area but also in other areas of the seat, like the shoulder area or the seat cushion. The adjusting device preferably allows for the actuation of two individual zones of a suspension mat of a seat with only one adjusting device.

### Background

For improving ergonomics and comfort of passenger car seats the suspension mat of a seat can be adjustable, particularly in the lumbar area. In some embodiments only the strength of the support can be adjusted, wherein the "thickness" of the lumbar actuation zone in X direction can be varied by the user according to his needs. In more advanced solutions also the "height" position of the lumbar actuation zone can be adjusted by the user. Thus, the user can adjust the lumbar actuation zone of the lumbar support in its effective height at the backrest to have the support at the desired position. In other embodiments the backrest of a seat comprises a suspension mat having a plurality of lumbar actuation zones or adjustment elements, which are herein commonly referred to as "actuation zones", which are positioned at different areas of the backrest, for allowing the user to adjust the contour of the backrest to his needs. Preferably, actuation zones can be arranged at different heights of the backrest. For example, four individual actuation zones could be arranged along the complete height of the backrest. Such a configuration can also be used to provide a massage function for the backrest, wherein the individual actuation zones are actuated continuously in different patterns.

For the actuation of an individual actuation zone of a suspension mat different actuation principles can be used. An actuation zone of a suspension mat can for example be actuated manually, via actuators that transfer a mechanical force via Bowden cable. Alternatively, an actuation zone can be actuated via pneumatic bladders, which are integrated into the backrest of a seat and may be selectively pumped up via an electric air pump. The most common actuation principle uses at least one electric motor, which generates a mechanical force that is transmitted via Bowden cables to the actuation zone of the suspension mat.

Various adjusting devices have been proposed for the actuation of suspension mat of backrest or seat cushion of a motor vehicle seat.

For example, the adjusting devices in the prior art documents US 8,840,186, US 6,814,407 or EP 1 762 155 are known. known. US 7770972B2 also discloses an adjusting device for a suspension mat.

However, there is still the need for further improvements of adjusting devices, particularly, regarding functionality, actuation forces, reliability, compactness and costs.

### Summary of the invention

The above-mentioned needs are fulfilled by an adjusting device according to claim 1. Particularly, the above mentioned need is fulfilled by an adjusting device for adjusting a suspension mat preferably for automotive seats, comprising a housing a first rack for driving at least one first Bowden cable; wherein the first rack is linearly displaceable within the housing; a second rack for driving at least one second Bowden cable; wherein the second rack is linearly displaceable within the housing; a rack gearwheel arranged in-between the first rack and the second rack; such that a rotation of the rack gearwheel around a first rotational direction effects a linear movement of the first rack in a first direction and simultaneously effects a linear movement of the second rack in a second direction different from the first direction.

Thus, the adjusting device allows by a very simple design a non-simultaneous adjustment of two different actuation zones of a suspension mat. This allows a non - simultaneous adjustment of two different actuation zones, particularly on the backrest of a seat, a so called 2W lumbar system. The very simple design improves the general robustness of the actuator and facilitates the assembly process. Further, the use of linearly displaceable racks allows linear force introduction into the respective Bowden cables without any bending of the cable or cable sheath. This reduces friction and enhances the effective actuation forces. Further, the design of the actuator requires only one electric motor for the individual actuation for two different actuation zones. Thus, the overall costs and weight of a vehicle seat is significantly reduced. Further, since only two actuators are required for the actuation of four individual zones of the backrest the space consumption within the backrest is minimized.

Preferably, the first direction is opposed to the second direction.

Preferably, the distance of displacement of the first rack always equals the distance of displacement of the second rack.

Preferably, the first rack comprises a first toothed rack at one outer side thereof and the second rack comprises a second toothed rack at one outer side thereof, wherein both toothed racks cooperate with the rack gearwheel.

Preferably, the rack gearwheel is driven by an electric motor via a gear drive.

Preferably, the gear drive comprises a worm gear driven by the electric motor and an intermediate gearwheel which drives the rack gearwheel.

Preferably, the housing comprises two or four receptacles for receiving the sheaths of the Bowden cables, wherein the receptacles are arranged at the same side of the housing.

Preferably, the adjusting device, further comprises a first intermediary cable, which can be driven by the first rack, and a second intermediary cable, which can be driven by the second rack. The first intermediary cable is preferably associated with and connected to at least one first Bowden cable. The second intermediary cable is preferably associated with and connected to at least one second Bowden cable. Thus, the intermediary cables serve as an extension of the first and second Bowden cables, and facilitate the mounting of the adjusting device to the suspension mat of a seat.

Preferably, the first rack comprises an inner space for the first Bowden cable or a cable of the first intermediary cable, and wherein the second rack comprises an interior space for the second Bowden cable or a cable of the second intermediary cable.

Preferably, the housing comprises a first stop for selectively abutting an end fitting of the first Bowden cable or a stopper fitting of the first intermediary cable and comprises a second stop for selectively abutting an end fitting of the second Bowden cable or a stopper fitting of the second intermediary cable. The first and second stops keep the inactive Bowden cables at a defined neutral position, wherein simultaneously the active Bowden cables are selectively actuated to the desired amount. The corresponding rack pushes the active Bowden cable - and intermediary cable, if applicable - in actuating direction, wherein simultaneously and the own load of each inactive Bowden cable moves this Bowden cable - and intermediary cable, if applicable - opposite to the actuating direction. Thus, when the active Bowden cable is tightened by the rack, the other, inactive Bowden cable abuts the stop of the housing and then stays in this rest position or neutral position.

Preferably, the adjusting device, further comprising an interface for mounting the adjusting device at a vertical or horizontal wire of a suspension mat, wherein the interface is arranged to be movable along said vertical or horizontal wire and rotatable about the same vertical or horizontal wire.

The interface for mounting the adjusting device at a vertical or horizontal wire or an adjusting device with such an interface can also be a separate invention, as it provides the advantage of a secure mounting of an adjusting device to a suspension mat, which the possibility for the adjusting device to move along said vertical or horizontal wire and to rotate around the same vertical or horizontal wire. Thus, some degree of freedom in rotation and translation for the mounted adjusting device is provided. This allows the adjusting device to change its position to a lower energy level when operating. This improves the overall comfort provided by the suspension mat, since overall flexibility, deflection and transition behavior of the suspension mat may be improved. Further, the force introduction of the adjusting device into the suspension mat is decreased, which avoids overly hard areas of the suspension mat. Preferably, such an adjusting device is one as described above and in the preferred embodiments.

Most preferably, the interface is placed at the vertical wire due to achieve a lower energy level when operating than at the horizontal wire.

Preferably, the interface has a first configuration for mounting the adjusting device in a vertical orientation to the vertical or horizontal wire of the suspension mat or has a second configuration for mounting the adjusting device in a horizontal orientation to the vertical or horizontal wire of the suspension mat. Thus, the same adjusting device can be used for a vertical and horizontal mounting, when the respective interface is chosen from a group of different interfaces. This improves flexibility in assembly possibilities for the adjusting device.

Preferably, the interface can be selectively attached to the housing either in the first configuration or in the second configuration.

Preferably, the interface comprises hooks that have a wire receptacle and at least one latching wall that extends towards the wire receptacle for a snap-fit connection. Thus, the interface can be mounted to a suspension mat, particularly a lumbar support, manually, without tools. Further, the design of the hooks allows a movability of the adjusting device with respect to the suspension mat for providing the degree of freedom in rotation and translation.

Preferably, the housing has lugs for mounting the adjusting device to the support structure via plastic fasteners.

An adjusting device comprising a housing with lugs for the mounting of the adjusting device via plastic fasteners or cable ties can also be a separate invention. Such lugs allow for a very flexible but strong and reliable mounting of the adjusting device to many different suspension mats. Preferably, this mounting can be done by cable ties or plastic fasteners of different kinds. This mounting may also provide some degree of freedom in rotation and translation for the adjusting device, which hast the advantages as described above. Preferably, such an adjusting device is one as described above and in the preferred embodiments.

### Brief description of the drawings

In the following preferred embodiments of the invention are described with respect to the drawings in which the same reference numbers refer to essentially the same elements and in which shows:
- Fig. 1A:: a schematic side view of a backrest of a vehicle seat with two individual actuation zones for adjusting the curvature of the backrest;
- Fig. 1B:: a front view of an embodiment of a suspension mat for the backrest of Fig. 1 with two actuation zones and one actuation device for the actuation of both actuation zones;
- Fig. 2A:: a schematic side view of a backrest of a vehicle seat with four individual actuation zones for adjusting the curvature of the backrest;
- Fig. 2B:: a front view of an embodiment of a suspension mat for the backrest of Fig. 1 with four actuation zones and two actuation devices for the actuation of the four actuation zones;
- Fig. 3:: a three-dimensional view of an embodiment of an adjusting device;
- Fig. 4:: a three-dimensional view of the embodiment of the adjusting device of Fig. 3, without a cover and with an intermediate gearwheel removed;
- Fig 5:: schematic views of different actuation states of the adjusting device of Fig. 1;
- Fig. 6A:: a front view of an adjusting device with removed cover and direct actuation of cables of two Bowden cables;
- Fig. 6B-D:: schematic views of different actuation states of the adjusting device of Fig. 6A;
- Fig. 7:: a suspension mat with four actuation zones and two adjusting devices mounted in vertical position, one facing upwards, one facing downwards;
- Fig. 8:: a suspension mat corresponding to Fig. 2B with four actuation zones and two adjusting devices mounted in horizontal position, one facing to the left, one facing to the right;
- Fig. 9:: a three-dimensional view of an interface for a vertical mounting of an adjusting device;
- Fig. 10:: a three-dimensional view of an interface for a horizontal mounting of an adjusting device;
- Fig. 11:: a sectional view of a hook that provides a rotation pivot;
- Fig. 12A and 12B:: frontal detail views of the mounting situation of a vertically mounted adjusting device in two conditions;
- Fig. 13A and 13B:: top detail views of the mounting situation of a vertical mounted adjusting device in two other conditions;
- Fig. 14A and 14B:: frontal detail views of the mounting situation of a horizontally mounted adjusting device in two conditions;
- Fig. 15A and 15B:: top detail views of the mounting situation of a horizontally mounted adjusting device in two other conditions; and
- Fig. 16A-C:: schematic side views of the mounting process of the hook of Fig. 11.

### Detailed description of preferred embodiments

In the following preferred embodiments of the invention are described with respect to the figures.

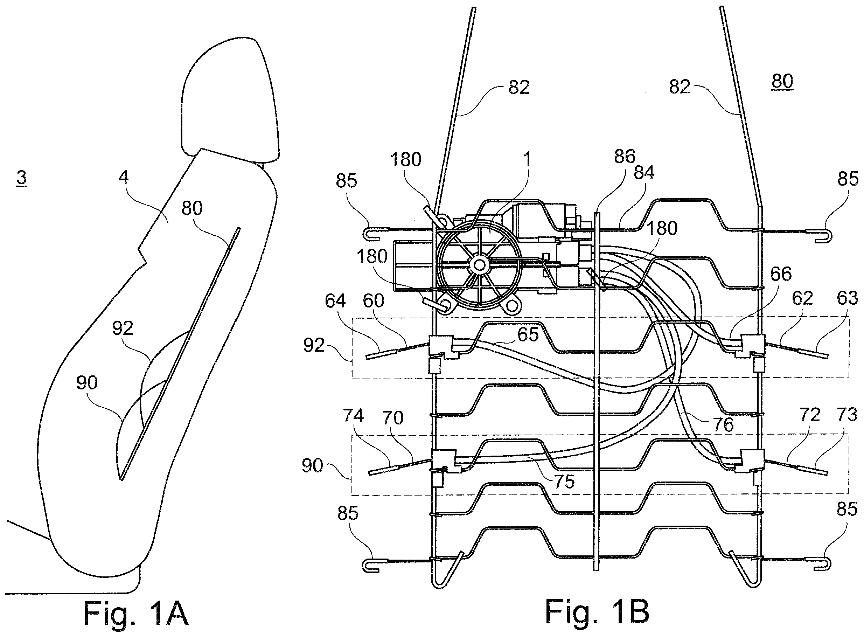

Fig. 1A shows a schematic side view of a backrest 4 of a vehicle seat 3 with two individual actuation zones 90, 92 for adjusting the curvature of the backrest 4. The two actuation zones 90, 92 are adjusted for example by a suspension mat 80 in the lumbar area of a seat as shown in Fig. 1B. However, the adjustment can also be done by means of any other type of surface for holding the back of a person, like a plastic plate with adjustable actuation zones, a combination of wires and one or more plastic plates, etc.

As exemplarily shown, the suspension mat 80 may comprise a plurality of horizontal wires 84 which are elastically suspended between two vertical wires 82. The suspension mat 80 can be suspended within a frame of a backrest 4 of a seat 3, i.e. a seat of a motor vehicle, like a car or a plane by means of wire hooks 85 and cable hooks 63, 64, 73, 74. The suspension mat 80 may further comprise a central element 86 for increasing the stiffness of the suspension mat 80. The suspension mat 80 of Fig. 1B comprises two actuation zones 90, 92, arranged at different vertical positions of the suspension mat 80. The two actuation zones 90, 92 can be individually adjusted to adapt the shape of the backrest 4 to the user's requirements.

The upper actuation zone 92 is adjusted by left and right first Bowden cables 60, 62. The left and right first Bowden cables 60, 62 terminate in left and right first cable hooks 63, 64 that can be hooked into receptacles of a backrest frame (not shown) of the backrest 4. Left and right first Bowden cable sheaths 65, 66 are connected to the left and right vertical wires 82, respectively. Thus, when the first Bowden cables 60, 62 are tightened or shortened the respective actuation zone 92 of the suspension mat 80 is pulled to the backrest frame and the curvature of the suspension mat 80 is increased as shown in Fig. 1A. Conversely, when the first Bowden cables 60, 62 are released or lengthened the respective actuation zone 92 of the suspension mat 80 is moving backwards and the curvature of the suspension mat 80 is decreased.

The lower actuation zone is correspondingly adjusted by left and right second Bowden cables 70, 72. The left and right second Bowden cables 70, 72 terminate in left and right first cable hooks 73, 74 that can be hooked into receptacles of a backrest frame of the backrest 4. Left and right second Bowden cable sheaths 75, 76 are connected to the left and right vertical wires 82, respectively. Thus, when the second Bowden cables 70, 72 are tightened or shortened the respective actuation zone 90 of the suspension mat 80 is pulled to the backrest frame and the curvature of the suspension mat 80 is increased or decreased as shown in Fig. 1A. Conversely, when the second Bowden cables 70, 72 are released or lengthened the respective actuation zone 90 of the suspension mat 80 is 80 is moving backwards and the curvature of the suspension mat 80 is decreased.

The left and right first Bowden cables 60, 62 are commonly actuated by the adjusting device 1. The left and right second Bowden cables 70, 72 are also commonly actuated by the adjusting device 1 but individually from the first Bowden cables 60, 62. Thus, the lower actuation zone 90 can be actuated individually from the upper actuation zone 92. However, due to the arrangement of the adjustment device 1 it is not possible to commonly actuate both actuation zones 90 and 92 simultaneously.

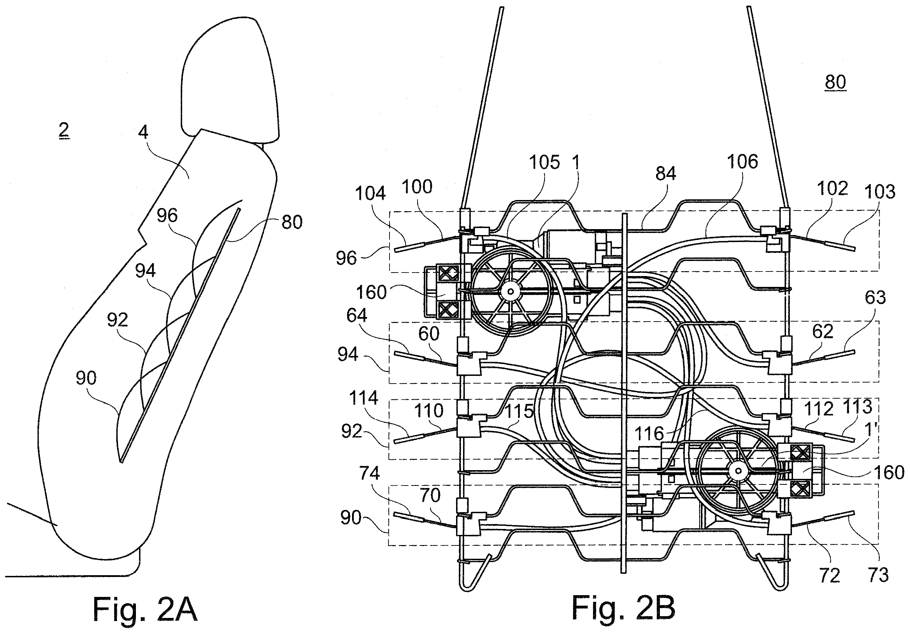

Fig. 2A shows a schematic side view of a backrest 4 of a vehicle seat 3 with four individual actuation zones 90, 92, 94, 96 for adjusting the curvature of the backrest 4 particularly in the lumbar area. The four actuation zones 90, 92, 94, 96 are set for example by a suspension mat 80 as shown in Fig. 2B. The suspension mat 80 basically corresponds to the suspension mat 80 of Fig. 1B but has adjustable cable hooks 63, 64 and 113, 114 instead of the wire hooks 85 of the embodiment of Fig. 1B. Thus, the suspension mat 80 of Fig. 2B comprises in total eight adjustable wire hooks, namely left and right wire hooks 63, 64 of left and right first Bowden cables 60, 62, left and right wire hooks 73, 74 of left and right second Bowden cables 70, 72, left and right wire hooks 103, 104 of left and right third Bowden cables 100, 102, and left and right wire hooks 113, 114 of left and right fourth Bowden cables 110, 112. The third Bowden cable 100, 102 run within corresponding third Bowden cable sheaths 105, 106 and the fourth Bowden cables 110, 112 run within fourth Bowden cable sheaths 115, 116. The Bowden cable sheaths 65, 66, 75, 76, 105, 106, 115, 116 are able to transmit pushing forces to the corresponding lumbar actuation zones 90, 92, 94, 96. The first and second Bowden cables 60, 62, 70, 72 are actuated by a first adjusting device 1 and the third and fourth Bowden cables 100, 102, 110, 112 are actuated by a second adjusting device 1'. As in the embodiment of Fig. 1B there are two first Bowden cables 60, 62 for a simultaneous actuation of the corresponding lumbar actuation zone at both sides of the suspension mat 80. Likewise, there are two second Bowden cables 70, 72, two third Bowden cables 100, 102 and two fourth Bowden cables 110, 112. It should be noted, that the actuation zones 90-96 are actuated by the adjusting devices 1, 1' in an intermitted fashion. Thus, actuation zone 90 is actuated by adjusting device 1, adjacent actuation zone 92 is actuated by adjusting device 1', adjacent actuation zone 94 is actuated by adjusting device 1 and adjacent actuation zone 92 is actuated by adjusting device 1'. By this configuration it is possible to simultaneously but individually actuate two adjacent actuation zones 90-96, which allows a superposition of the actuation zones and to set the "height" position of the effective actuation zone of the suspension mat 80 continuously to the desired position. This has the advantage that only two adjusting devices 1, 1' are required to adjust four actuation zones 90-94 individually, or in superposition of two adjacent actuation zones.

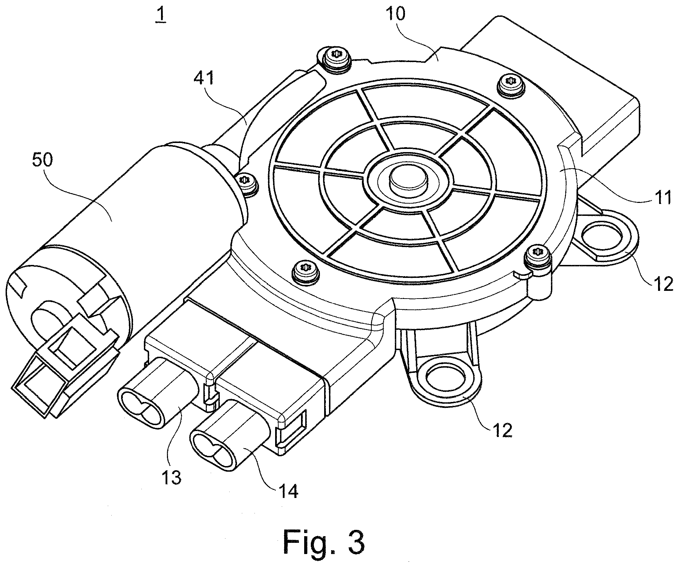

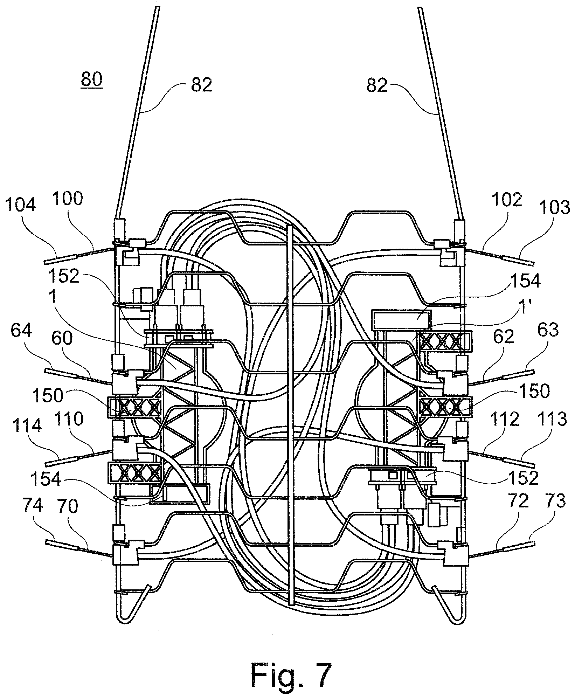

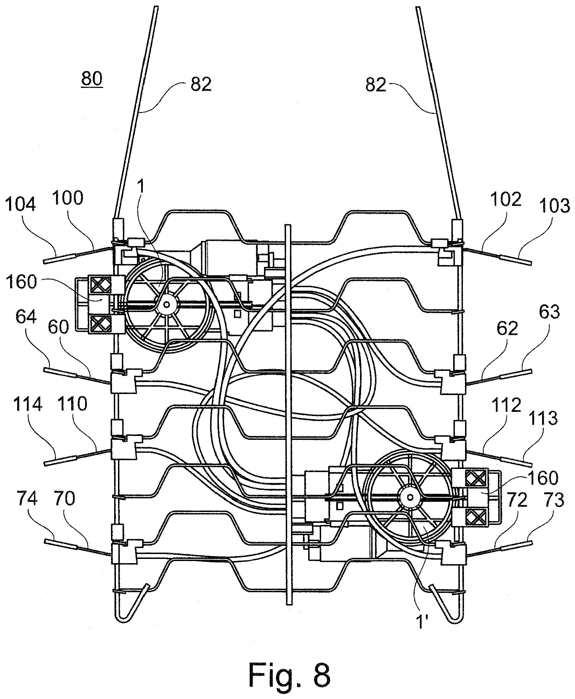

Fig. 3 shows one actuation device 1, 1' in a three-dimensional view as used in the suspension mats 80 of Fig 1B and 7, and twice in Fig. 2B and 8. The actuation device 1, 1' comprises a housing 10 with a lid 11 and with mounting lugs 12 for the mounting of the actuation device 1, 1' in the easiest form with cable ties 180 to the grid of horizontal or vertical wires 82, 84 of a suspension mat 80 (see Fig. 1B) or to another seat element, like the seat frame.

The actuation device 1, 1' further comprises receptacles 13, 14 for the sheaths 65, 66, 75, 76 of first and second Bowden cables 60, 62, 70, 72. Thus, each of the receptacles 13, 14 can hold two of the sheaths 65, 66, 75, 76. The receptacles 13, 14 are all preferably arranged at the same side of the housing 10. This allows an optimized mounting of the actuation device 1, 1' to the suspension mat 80 or the seat frame.

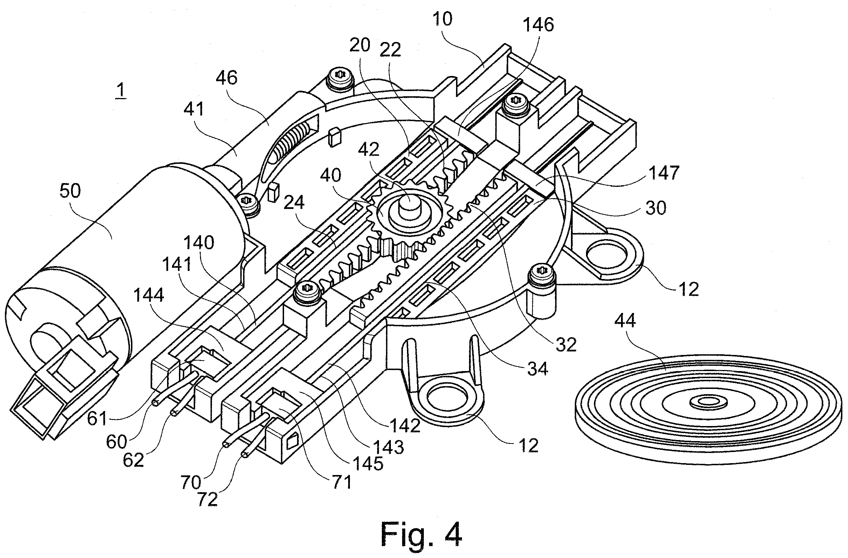

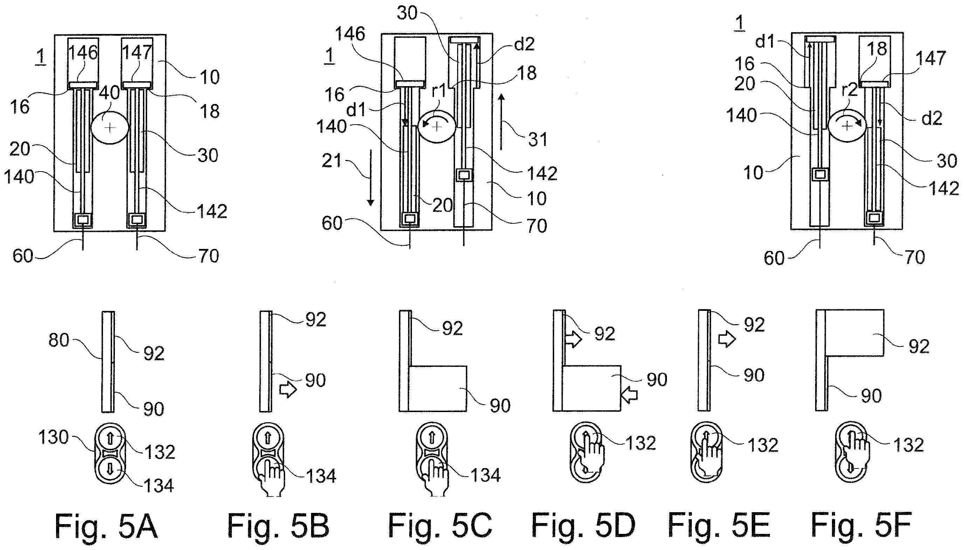

Fig. 4 shows the actuation device 1, 1' of Fig. 3 when the lid 11 and an intermediate gearwheel 44 is removed for showing the interior of the actuation device 1. The electric motor 50 is preferably a DC motor and can be driven in a first and a second rotation direction. When the motor 50 is driven in the first direction, it drives the worm gear 46, which drives the intermediate gearwheel 44. The worm gear 46 and the intermediate gearwheel 44 act as a reduction gear drive 41. The intermediate gearwheel 44 is directly connected to a rack gearwheel 40. The intermediate gearwheel 44 and the rack gearwheel 40 are commonly rotatably mounted on a rotation axis 42, that is located in-between a first rack 20 and a second rack 30. The rack gearwheel 40 has a smaller diameter than the intermediate gearwheel 44, for reducing the rotational speed and increasing the torque as well. The rack gearwheel 40 commonly drives the first and second racks 20 and 30 but in different direction. To this end the teeth of the rack gearwheel 40 act upon a first toothed rack 22 of the first rack 20 and simultaneously on the opposed side thereof upon a second toothed rack 32 of the second rack 30. Thus, when the electric motor 50 rotates in the first rotational direction the rack gearwheel 40 rotates in a first rotational direction r1 and the first rack 20 moves in a first direction 21, and simultaneously the second rack 30 moves in a second direction 31 (see Fig. 5). Correspondingly, when the electric motor 50 rotates in the second rotational direction the rack gearwheel 40 rotates in a second rotational direction r2 and the first rack 20 and the second rack 30 move in the opposite directions. If the directions 21 and 31 are parallel to each other, as shown in the preferred embodiments, when the electric motor 50 rotates in the second rotational direction the rack gearwheel 40 rotates in a second rotational direction r2 and the first rack 20 moves in a second direction 31, and simultaneously the second rack 30 moves in a first direction 21.

In the embodiment of Fig. 4 the first rack 20 comprises an elongated linear shape and actuates a first intermediary cable 140, which comprises a steel cable 141 and at a first end thereof a stopper fitting 146 and an opposite thereof comprises a cable attachment fitting 144. The attachment fitting 144 allows the attachment of at least one Bowden cable 60, 62 to the first intermediary cable 140. In the shown embodiment of Fig. 4 the two Bowden cables 60, 62 comprise a common end fitting 61 which is inserted into a corresponding receptacle of the cable attachment fitting 144. The steel cable 141 preferably runs within an inner space 24, preferably within a slot, within the first rack 20. Further, the cable attachment fitting 144 can also run inside the housing 10 and can be pushed by the respective rack 20 for the actuation of the two first Bowden cables 60, 62.

Similarly, the second rack 30 comprises also an elongated linear shape and actuates a second intermediary cable 142, which comprises a steel cable 143 and at a first end thereof a stopper fitting 147 and an opposite thereof comprises cable attachment fitting 145. The attachment fitting 145 allows the attachment of at least one Bowden cable 70, 72 to the second intermediary cable 142. In the shown embodiment of Fig. 4 the two Bowden cables 70, 72 comprise a common end fitting 71 which is inserted into a corresponding receptacle of the cable attachment fitting 145. The steel cable 143 preferably runs within an inner space 34, preferably within a slot, within the second rack 30. Further, the cable attachment fitting 145 can also run inside the housing 10 and can be pushed by the respective rack 30 for the actuation of the two second Bowden cables 70, 72.

The steel cables 141 and 143 of the first and second intermediary cables 140, 142 are longer than the lateral extension of the first and second racks 20, 30, respectively. Thus, the first and second racks 20, 30 are able to move along the respective intermediary cables 140, 142 in the first direction 21, particularly when the respective intermediary cable 140, 142 is stopped by its stopper fitting 146, 147 abutting a stop 16, 18 at the housing 10 and the other intermediary cable 142, 140 is actuated by moving into the second direction 21.

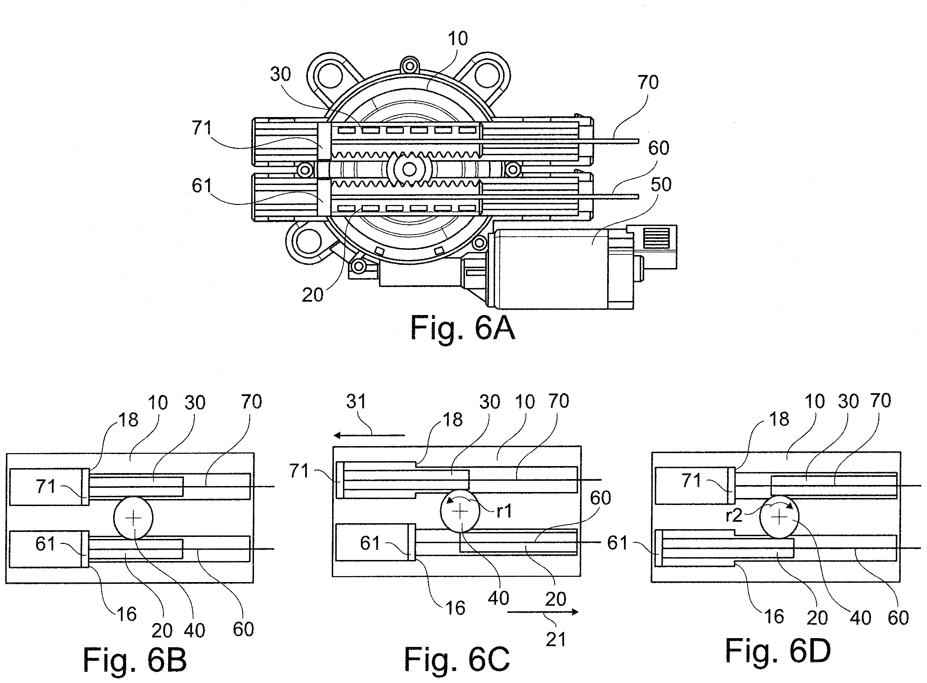

The function of the actuation device 1, 1' is explained in the following in more detail with respect to Figs. 5 and 6. Figs. 5A-F show schematically a sequence of operation of an actuation device 1 and a corresponding suspension mat 80 with two vertically arranged actuation zones 90, 92. The actuation device 1 can have two intermediary cables 140, 142, however, the Bowden cables 60, 62, 70, 72 could also be actuated directly by the first and second racks 20, 30, as shown in in Figs. 6A-D.

The Figs. 5A-F show in the top row schematically the housing 10, the first 20 and second rack 30, the rack gearwheel 40 and the first 140 and second intermediary cable 142. Bowden cables 60, 70 are attached to the intermediary cables 140, 142, respectively. In the center row of Figs. 5A-F the suspension mat 80 with two actuation zones 90, 92 in the lumbar area is indicated. Below in the lower row of Figs. 5A-F a two-channel electric push button 130 with an up button 132 and a down button 134 is indicated during actuation.

Fig. 5A shows a neutral condition of the actuation device 1 in which neither the first 90 nor the second actuation zone 92 of the suspension mat 80 is actuated. In this neutral condition the respective Bowden cables 60, 70 can be subjected to an initial load in first direction 21, such that any slack is removed and the Bowden cables 60, 70 are abutting the corresponding stops 16, 18 at the housing 10. The first and second racks 20, 30 are positioned on the same level within the housing 10. Both stopper fittings 146 and 147 abut the corresponding stop 16, 18 within the housing 10. The intermediary cables 140 and 142 are at the lowest position and the Bowden cables 60 and 70 are not actuated but may be pre-loaded with an initial load.

If the user now actuates the electric motor 50 of the actuation device 80 by pushing either one of the push buttons 132 or 134 one of the actuation zones 90, 92 can be actuated. In the embodiment of Fig. 5B the user pushes the low push button 134 for actuating the lower actuation zone 90. This causes rotation of the rack gearwheel 40 in rotation direction r1 and the first rack 20 to move in first direction 21, i.e. downwards. Simultaneously, the rotation of the rack gearwheel 40 in rotation direction r1 causes the second rack 30 to move in second direction 31, i.e. upwards. The movements of the first and second racks 20, 30 are such that the movement distances d1 and d2 are always the same.

As shown in Fig. 5C, the upwards movement 31 of second rack 30 causes an upwards movement of the second intermediary cable 142 and a tightening of the second Bowden cable 70. On the other hand, the downwards movement 21 of the first rack 20 does not change the length of the first Bowden cable 60. The first rack 20 is not pushing the intermediary cable 140 in direction 21. The intermediary cable 140 remains stationary as the stopper fitting 146 of the first intermediary cable 140 abuts stop 16 of the housing 10. Fig. 5C shows the maximum actuation of the second Bowden cable 70. This causes that the lower actuation zone 90 of the suspension mat 80 is fully actuated, whereas the upper actuation zone 92 is non-actuated. The actuation device 1 can preferably generate a load in the range between 5 to 400N for actuating an actuation zone of a suspension mat 80.

If the user afterwards pushes the up button 132, as shown in Fig. 5D, this causes a rotation of the rack gearwheel 40 in rotation direction r2 (see Fig. 5F) and causes the first rack 20 to move opposite to the first direction 21, i.e. upwards. Simultaneously, the rotation of the rack gearwheel 40 in rotation direction r2 causes the second rack 30 to move opposite to the second direction 31, i.e. downwards. This downward movement of the second rack 30 causes a release or lengthening of the second Bowden cable 70, due to the working load on this cable. These movements cause that the actuation of the lower actuation zone 90 of the suspension mat 80 is decreased until the neutral condition of Fig. 5A is reached again.

If the user continues to push the up button 132, as shown in Fig. 5E, the upwards movement of the first rack 20 will move the first intermediary cable 140 to move upwards and to tighten the first Bowden cable 60. Simultaneously the second rack 30 will move downwards, but the movement of the second intermediary cable 142 will stop as the stopper fitting 147 abuts the stop 18 of housing 10. Thus, the second Bowden cable 70 remains in the non-actuated position.

Fig. 5F show the condition in which the first Bowden cable 60 is maximum tightened and the upper actuation zone 92 of the suspension mat 80 is fully actuated.

Figs. 6A-D show a further embodiment of the adjusting device 1, wherein the intermediary cables 140 and 142 are omitted and the first and second Bowden cables 60, 70 are directly actuated by the respective first and second racks 20, 30. In this embodiment the Bowden cables 60, 70 comprise end fittings 61, 71 that can move within the housing 10 when tightening the Bowden cables 60, 70, and that can abut the stops 16, 18 in neutral condition as shown in Fig. 6B. Thus, the end fittings 61, 71 functionally correspond to the stopper fittings 146, 147 of the intermediary cables 140, 142 described above. The adjusting device 1 of Figs. 6A-D functions in the same manner as the device of Figs. 5A-F. Thereby, Fig. 6B corresponds to Fig. 5A, Fig. 6C correspond to Fig. 5C and Fig. 6D corresponds to Fig. 5F.

The adjustment of the actuation zones 90 and 92 by the adjusting device 1 of Figs. 5 and 6 is such that either actuation zone 90 or actuation zone 92 is actuated, but not both. If, however, two of the adjusting device 1 of Figs. 5 and 6 are used to actuate four actuation zones of one suspension mat 80, as shown in Fig. 2A and 2B then a superposition of two adjacent actuation zones 90-96 is possible, even when each individual adjusting device 1, 1' can only actuate one of two actuation zones at a time.

In Fig. 1 the adjusting device 1 is attached to the grid of the suspension mat 80 by three cable fasteners or zip ties 180. Two zip ties 180 connect two mounting lugs 12 to one of the vertical wires 82. One additional zip tie 180 connect the Bowden cable sheaths 75, 76 with one of the horizontal wires 84. Such attachment is very flexible and can be used with a plurality of different suspension mats 80. Additionally, depending on how tight the zip ties 180 are fastened the adjusting device 1 has some freedom to move during actuation which reduces the adjustment forces caused by the routing of the Bowden cables 60, 62, 70, 72.

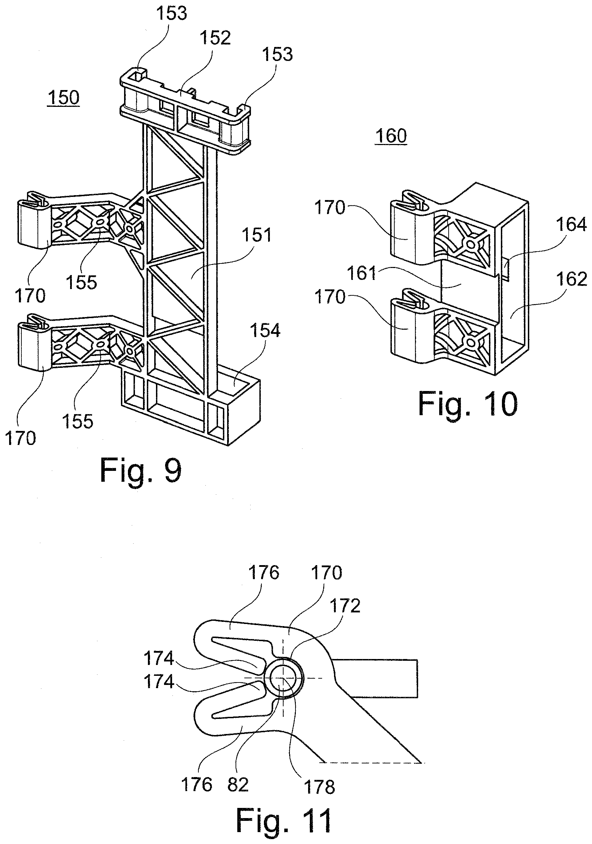

Fig. 7 shows an embodiment in which two adjusting devices 1, 1' are attached to the suspension mat 80 in a vertical orientation. Particularly, each of the two adjusting devices 1, 1' is attached to a vertical wire 82 by means of an interface for vertical orientation 150. Details of this interface 150 are shown in Fig. 9. The interface 150 comprises a main body 151 that has at one end thereof a bracket 152 with bracket end hooks 153 and on the opposite end thereof a frame 154. The bracket 152 and the frame 154 releasable connect the interface 150 to the housing 10 of the adjusting device. Preferably, for mounting the interface 150 to the adjusting device 1 as snap fit connection is uses and not tools are required. Two arms 155 extend from the main body 151 and terminate in hooks 170 that are mounted to the vertical wire 82 by a snap fit.

Fig. 8 shows another embodiment in which two adjusting devices 1, 1' are attached to the suspension mat 80 in a horizontal orientation. Particularly, each of the two adjusting devices 1, 1' is attached to a vertical wire 82 by means of an interface for horizontal orientation 160. Details of this interface 160 are shown in Fig. 10. The interface 160 comprises a main body 161 that is formed by a frame 162, which preferably has a rectangular hollow interior. The frame 162 preferably comprises a lath opening 164 or similar receptacle for latching with a corresponding latch at the outer housing 10 of the adjusting device 1. Further the interface 160 comprises two hooks 170 that extend from the main body 161 that are mounted to the vertical wire 82 by a snap fit.

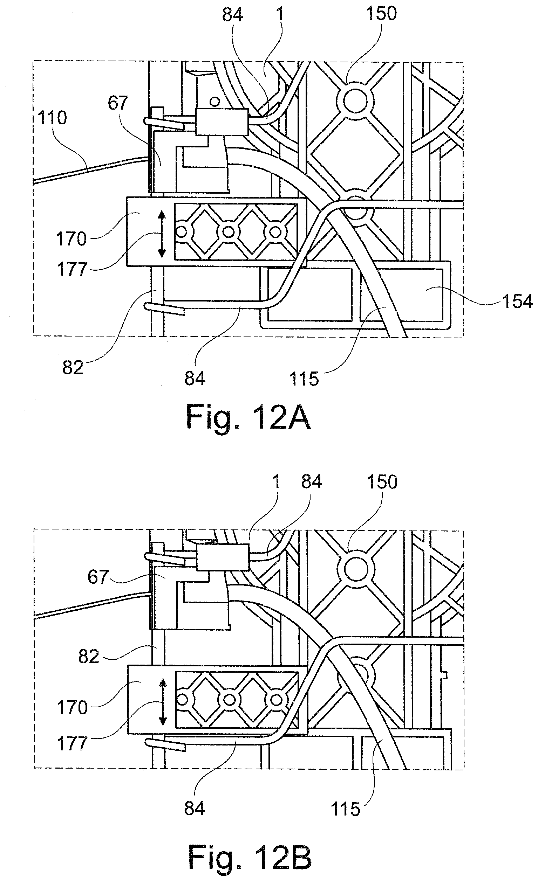

Details of the hooks 170 are shown in Fig. 11. The hooks 170 comprise two latching walls 174 that extend from two side walls 176 towards the vertical wire 82. Each latching walls 174 and the side wall 176 form, in a longitudinal section, a V-shaped arrangement. Between the two latching walls 174 a, in a longitudinal section, V-shaped opening is provided, for mounting the hooks 170 to the vertical wire 82. The hook 170 further comprises a, in a longitudinal section, round wire receptacle 172 that is slightly larger than the diameter of the vertical wire 82. The length of the latching walls 174 and the diameter of the wire receptacle 172 is chosen such that the interfaces 150, 160 can slide and rotate on the vertical wire 82 which is shown in Figs. 12 - 15.

Fig. 12A and 12B shows a detail of a mounting situation, where the interface 150 and the mounted actuation device 1 has the freedom to move up and down along the vertical wire 82 as indicated by an arrow 177. In Fig. 12A the interface 150 and the mounted actuation device 1 are moved up to a higher position, where hook 170 may abut plastic sheath connector 67 of Bowden cable sheath 115. In Fig. 12B the interface 150 and the mounted actuation device 1 are moved down to a lower position, where hook 170 may abut one of the horizontal wires 84.

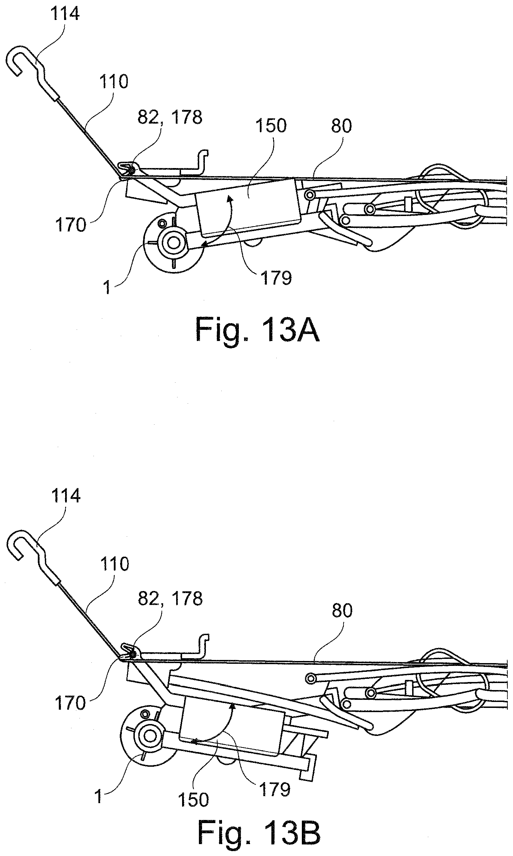

The interface 150 and the mounted actuation device 1 also has the freedom to rotate around the rotation pivot 178 provided by the hooks 170 and the vertical wire 82. The rotation is indicated by the arrows 179 in Figs. 13A and 13B. In Fig. 13A the actuation device 1 is rotated to a front position and in Fig. 13B the actuation device 1 is rotated to a rear position.

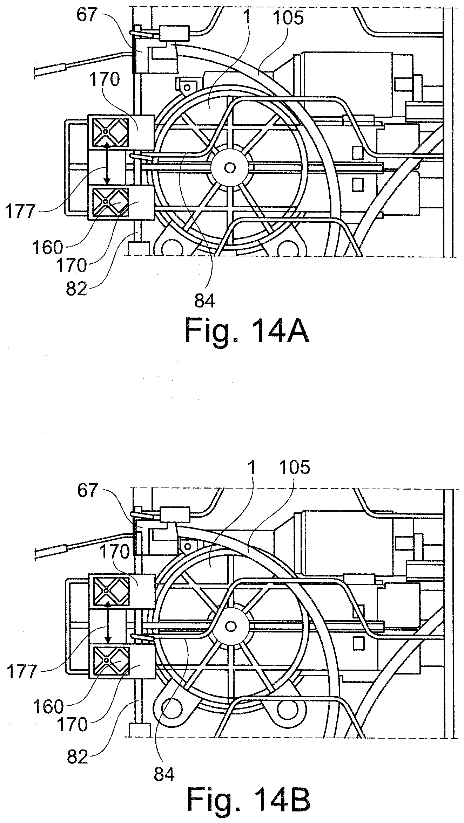

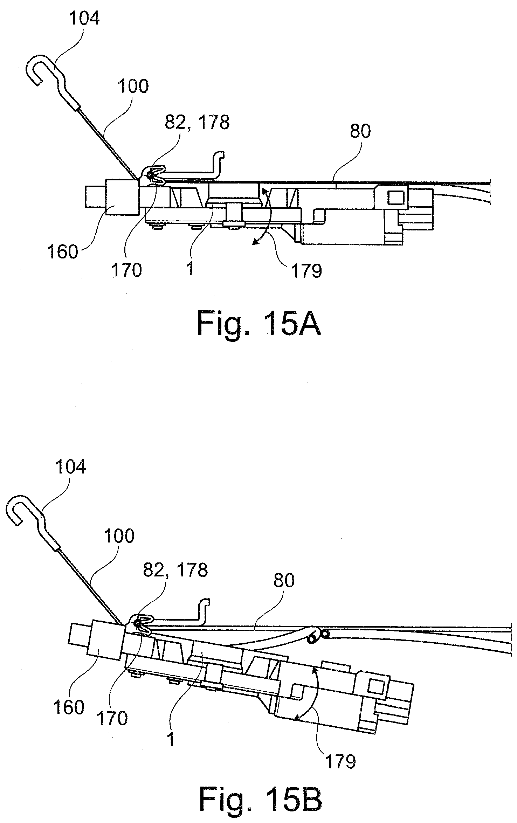

A similar freedom to rotate around and to move up and down along the vertical wire 82 is provided for an actuation device 1 in horizontal orientation with interface 160 as shown in Figs. 14A, 14B and 15A, 15B. The arrows 177 of Figs. 14A and 14B indicate the freedom to slide up and down along the vertical wire 82. In the shown embodiment the up and down movement 177 is limited by the distance of the hooks 170 which can abut one of the horizontal wires 84 in-between them. The arrows 179 of Figs. 15A and 15B indicate the freedom of the actuation device 1 to rotate around the rotation pivot 178 provided by the hooks 170 and the vertical wire 82.

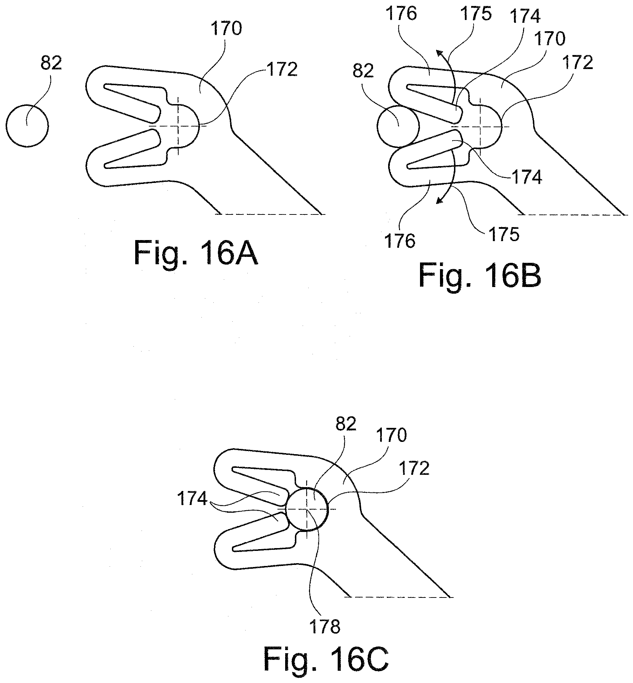

Figs. 16A to 16B show the mounting sequence for the mounting of the hooks 170 to the vertical wires 82 via snap fit. Fig. 16A show the initial, not-mounted situation. If the hook 170 is pushed onto the vertical wire 82, as shown in Fig. 16B the vertical wire 82 pushes the elastic latching walls 174 away from each other, as shown by arrows 175. When the vertical wire 82 reaches the wire receptacle 172 the elastic latching walls 174 snap back to each other and hold the vertical wire 82 securely within the hook 170. Thus, the mounting of the adjusting device 1 can easily and securely be done without any tools and the hooks 170 provide the favorable freedom to move and to rotate with respect to the suspension mat 80.

### List of reference signs:

- 1: adjusting device
- 3: automotive seat
- 4: backrest
- 10: housing
- 11: lid
- 12: mounting lugs
- 13, 14: sheath receptacles
- 20: first rack
- 21: first direction
- 22: first toothed rack
- 24: inner space, slot
- 30: second rack
- 31: second direction
- 32: second toothed rack
- 34: inner space, slot
- 40: rack gearwheel
- 41: reduction gear drive
- 42: rotation axis
- 44: intermediate gearwheel
- 46: worm gear
- 50: electric motor
- 60, 62: first Bowden cable
- 61: end fitting
- 63, 64: first Bowden cable hook
- 65, 66: first Bowden cable sheath
- 67: sheath connector
- 70, 72: second Bowden cable
- 71: end fitting
- 73, 74: second Bowden cable hook
- 75, 76: second Bowden cable sheath
- 80: suspension mat
- 82: vertical wires
- 84: horizontal wires
- 85: wire hooks
- 86: central element
- 90, 92, 94, 96: actuation zone
- 100, 102: third Bowden cable
- 103, 104: third Bowden cable hook
- 105, 106: third Bowden cable sheath
- 110, 112: fourth Bowden cable
- 114,113: fourth Bowden cable hook
- 115, 116: fourth Bowden cable sheath
- 130: electric push button
- 132: up button
- 134: down button
- 140: first intermediary cable
- 141, 143: steel cable
- 142: second intermediary cable
- 144, 145: end fitting
- 146, 147: stopper fitting
- 150: interface for vertical orientation
- 151: main body
- 152: bracket
- 153: bracket end hooks
- 154: frame
- 155: arms
- 160: interface for horizontal orientation
- 161: main body
- 162: frame
- 164: latch opening
- 170: hook
- 172: wire receptacle
- 174: latching walls
- 175: arrow
- 176: side walls
- 177: arrow
- 178: rotation pivot
- 179: arrow
- 180: plastic fastener, zip tie

## Claims

1. Adjusting device (1) for adjusting a suspension mat (80) preferably for automotive seats (3), comprising:
a. a housing (10);
b. a first rack (20) for driving at least one first Bowden cable (60, 62); wherein the first rack (20) is linearly displaceable within the housing (10);
c. a second rack (30) for driving at least one second Bowden cable (70, 72), wherein the second rack (30) is linearly displaceable within the housing (10); and
d. a rack gearwheel (40) arranged in-between the first rack (20) and the second rack (30), **characterised in that** a rotation of the rack gearwheel (40) around a first rotational direction (r1) effects a linear movement of the first rack (20) in a first direction (21) and simultaneously effects a linear movement of the second rack (30) in a second direction (31) different from the first direction (21).

2. Adjusting device according to claim 1, wherein the first direction (21) is opposed to the second direction (31).

3. Adjusting device according to one of the claims 1 or 2, wherein the distance of displacement (d1) of the first rack (20) always equals the distance of displacement (d2) of the second rack (30).

4. Adjusting device according to one of the claims 1 to 3, wherein the first rack (20) comprises a first toothed rack (22) at one outer side thereof and the second rack (30) comprises a second toothed rack (32) at one outer side thereof, wherein both toothed racks (22, 32) cooperate with the rack gearwheel (40).

5. Adjusting device according to one of the claims 1 to 4, wherein the rack gearwheel (40) is driven by an electric motor (50) via a gear drive (41).

6. Adjusting device according to claim 5, wherein the gear drive (41) comprises a worm gear (46) driven by the electric motor (50) and an intermediate gearwheel (44) which drives the rack gearwheel (40).

7. Adjusting device according to one of the claims 1 to 6, wherein the housing (10) comprises two or four receptacles (13, 14) for receiving the sheaths (65, 66, 75, 76) of the Bowden cables (60, 62, 70, 72), wherein the receptacles (13, 14) are arranged at the same side of the housing (10).

8. Adjusting device according to one of the claims 1 to 7, further comprising a first intermediary cable (140), which can be driven by the first rack (20), and a second intermediary cable (142), which can be driven by the second rack (30).

9. Adjusting device according to one of the claims 1 to 8, wherein the first rack (20) comprises an inner space (24) for the first Bowden cable (60, 62) or a cable (141) of the first intermediary cable (140), and wherein the second rack (30) comprises an interior space (34) for the second Bowden cable (70, 72) or a cable (143) of the second intermediary cable (142).

10. Adjusting device according to one of the claims 1 to 9, wherein the housing (10) comprises a first stop (16) for selectively abutting an end fitting (61) of the first Bowden cable (60) or an a stopper fitting (146) of the first intermediary cable (140), and the housing (10) comprises a second stop (18) for selectively abutting an end fitting (71) of the second Bowden cable (70) or a stopper fitting (147) of the second intermediary cable (142).

11. Adjusting device (1) according to one of the claims 1 to 10, comprising an interface (150, 160) for mounting the adjusting device (1) at a vertical (82) or horizontal wire (84) of a suspension mat (80), wherein the interface (150) is arranged to be movable along said vertical (82) or horizontal wire (84) and rotatable about the same vertical (82) or horizontal wire (84).

12. Adjusting device according to claim 11, wherein the interface (150, 160) has a first configuration (150) for mounting the adjusting device (1) in a vertical orientation to the vertical (82) or horizontal wire (84) of the suspension mat (80) or has a second configuration (160) for mounting the adjusting device (1) in a horizontal orientation to said vertical (82) or horizontal wire (84) of the suspension mat (80).

13. Adjusting device according to one of the claims 11 or 12, wherein the interface (150, 160) can be selectively attached to the housing (10) of the adjusting device (1) either in the first configuration (150) or in the second configuration (160).

14. Adjusting device according to one of the claims 11 to 13 wherein the interface (150, 160) comprises hooks (170) that have a wire receptacle (172) and at least one latching wall (174) that extends towards the wire receptacle (172) for a snap-fit connection.

15. Adjusting device (1) according to one of the claims 1 to 10, wherein the housing (10) of the adjusting device (1) has lugs (12) for mounting the adjusting device (1) to a suspension mat (80) via plastic fasteners (180).

## Patentansprüche

1. Verstellvorrichtung (1) zum Verstellen einer Federungsmatte (80) vorzugsweise für Autositze (3), umfassend:
a. ein Gehäuse (10);
b. eine erste Stange (20) zum Antreiben wenigstens eines ersten Bowdenzugs (60, 62); wobei die erste Stange (20) innerhalb des Gehäuses (10) linear verschiebbar ist;
c. eine zweite Stange (30) zum Antreiben wenigstens eines zweiten Bowdenzugs (70, 72), wobei die zweite Stange (30) innerhalb des Gehäuses (10) linear verschiebbar ist; und
d. ein zwischen der ersten Stange (20) und der zweiten Stange (30) angeordnetes Stangenzahnrad (40), **dadurch gekennzeichnet, dass** eine Drehung des Stangenzahnrads (40) um eine erste Drehrichtung (r1) eine lineare Bewegung der ersten Stange (20) in eine erste Richtung (21) und gleichzeitig eine lineare Bewegung der zweiten Stange (30) in eine von der ersten Richtung (21) verschiedene zweite Richtung (31) bewirkt.

2. Verstellvorrichtung nach Anspruch 1, wobei die erste Richtung (21) der zweiten Richtung (31) entgegengesetzt ist.

3. Verstellvorrichtung nach einem der Ansprüche 1 oder 2, wobei der Verschiebeweg (d1) der ersten Stange (20) immer gleich dem Verschiebeweg (d2) der zweiten Stange (30) ist.

4. Verstellvorrichtung nach einem der Ansprüche 1 bis 3, wobei die erste Stange (20) an einer Außenseite eine erste Zahnstange (22) und die zweite Stange (30) an einer Außenseite eine zweite Zahnstange (32) aufweist, wobei beide Zahnstangen (22, 32) mit dem Stangenzahnrad (40) zusammenwirken.

5. Verstellvorrichtung nach einem der Ansprüche 1 bis 4, wobei das Stangenzahnrad (40) von einem Elektromotor (50) über einen Zahnradantrieb (41) angetrieben wird.

6. Verstellvorrichtung nach Anspruch 5, wobei der Zahnradantrieb (41) ein vom Elektromotor (50) angetriebenes Schneckengetriebe (46) und ein Zwischenzahnrad (44), das das Stangenzahnrad (40) antreibt, umfasst.

7. Verstellvorrichtung nach einem der Ansprüche 1 bis 6, wobei das Gehäuse (10) zwei oder vier Aufnahmen (13,14) zur Aufnahme der Ummantelungen (65, 66, 75, 76) der Bowdenzüge (60, 62, 70, 72) aufweist, wobei die Aufnahmen (13, 14) an derselben Seite des Gehäuses (10) angeordnet sind.

8. Verstellvorrichtung nach einem der Ansprüche 1 bis 7, ferner umfassend einen ersten Zwischenzug (140), der von der ersten Stange (20) antreibbar ist, und einen zweiten Zwischenzug (142), der von der zweiten Stange (30) antreibbar ist.

9. Verstellvorrichtung nach einem der Ansprüche 1 bis 8, wobei die erste Stange (20) einen Innenraum (24) für den ersten Bowdenzug (60, 62) oder ein Seil (141) des ersten Zwischenzugs (140) aufweist, und wobei die zweite Stange (30) einen Innenraum (34) für den zweiten Bowdenzug (70, 72) oder ein Seil (143) des zweiten Zwischenzugs (142) aufweist.

10. Verstellvorrichtung nach einem der Ansprüche 1 bis 9, wobei das Gehäuse (10) einen ersten Anschlag (16) zum selektiven Anliegen an einem Endstück (61) des ersten Bowdenzugs (60) oder an einem Anschlagstück (146) des ersten Zwischenzugs (140) aufweist, und das Gehäuse (10) einen zweiten Anschlag (18) zum selektiven Anliegen an einem Endstück (71) des zweiten Bowdenzugs (70) oder an einem Anschlagstück (147) des zweiten Zwischenzugs (142) aufweist.

11. Verstellvorrichtung (1) nach einem der Ansprüche 1 bis 10, umfassend eine Schnittstelle (150, 160) zur Montage der Verstellvorrichtung (1) an einem vertikalen (82) oder horizontalen Draht (84) einer Federungsmatte (80), wobei die Schnittstelle (150) entlang des vertikalen (82) oder horizontalen Drahts (84) beweglich und um denselben vertikalen (82) oder horizontalen Draht (84) drehbar angeordnet ist.

12. Verstellvorrichtung nach Anspruch 11, wobei die Schnittstelle (150, 160) eine erste Konfiguration (150) zur Montage der Verstellvorrichtung (1) in einer vertikalen Ausrichtung zum vertikalen (82) oder horizontalen Draht (84) der Federungsmatte (80) oder eine zweite Konfiguration (160) zur Montage der Verstellvorrichtung (1) in einer horizontalen Ausrichtung zum vertikalen (82) oder horizontalen Draht (84) der Federungsmatte (80) aufweist.

13. Verstellvorrichtung nach einem der Ansprüche 11 oder 12, wobei die Schnittstelle (150, 160) selektiv am Gehäuse (10) der Verstellvorrichtung (1) entweder in der ersten Konfiguration (150) oder in der zweiten Konfiguration (160) befestigt werden kann.

14. Verstellvorrichtung nach einem der Ansprüche 11 bis 13, wobei die Schnittstelle (150, 160) Haken (170) umfasst, die eine Drahtaufnahme (172) und mindestens eine Rastwand (174) aufweisen, die sich zur Drahtaufnahme (172) hin für eine Schnappverbindung erstreckt.

15. Verstellvorrichtung (1) nach einem der Ansprüche 1 bis 10, wobei das Gehäuse (10) der Verstellvorrichtung (1) Laschen (12) zur Montage der Verstellvorrichtung (1) an einer Federungsmatte (80) über Kunststoffbefestigungselemente (180) aufweist.

## Revendications

1. Dispositif d'ajustement (1) pour l'ajustement d'une armature de suspension (80), de préférence pour des sièges automobiles (3), comprenant :
a. un carter (10) ;
b. une première crémaillère (20) pour entraîner au moins un premier câble Bowden (60, 62), la première crémaillère (20) étant déplaçable linéairement à l'intérieur du carter (10) ;
c. une seconde crémaillère (30) pour entraîner au moins un second câble Bowden (70, 72), la seconde crémaillère (30) étant déplaçable linéairement à l'intérieur du carter (10) ; et
d. un pignon de crémaillère (40) situé entre la première crémaillère (20) et la seconde crémaillère (30), **caractérisé en ce qu'**une rotation du pignon de crémaillère (30) suivant un premier sens de rotation (r1) engendre un déplacement linéaire de la première crémaillère (20) dans une première direction (21), et engendre simultanément un déplacement linéaire de la seconde crémaillère (30) dans une seconde direction (31) différente de la première direction (21).

2. Dispositif d'ajustement selon la revendication 1, dans lequel la première direction (21) est en sens opposé de la seconde direction (31).

3. Dispositif d'ajustement selon l'une des revendications 1 ou 2, dans lequel la course du déplacement (d1) de la première crémaillère (20) est toujours égale à la course de déplacement (d2) de la seconde crémaillère (30).

4. Dispositif d'ajustement selon l'une des revendications 1 à 3, dans lequel la première crémaillère (20) comprend une première crémaillère dentée (22) sur un côté qui lui est extérieur, et la seconde crémaillère (30) comprend une seconde crémaillère dentée (32) sur un côté qui lui est extérieur, les deux crémaillères dentées (22, 32) coopérant avec le pignon de crémaillère (40).

5. Dispositif d'ajustement selon l'une des revendications 1 à 4, dans lequel le pignon de crémaillère (40) est entrainé par un moteur électrique (50) par le biais d'un engrenage d'entrainement (41).

6. Dispositif ajustement selon la revendication 5, dans lequel l'engrenage d'entrainement (41) comprend une vis sans fin (46) entraînée par le moteur électrique (50) et un pignon intermédiaire (44) qui entraine le pignon de crémaillère (40).

7. Dispositif d'ajustement selon l'une des revendications 1 à 6, dans lequel le carter (10) comprend deux ou quatre réceptacles (13, 14) destinés à recevoir les gaines (65, 66, 75, 76) des câbles Bowden (60, 62, 70, 72), les réceptacles (13,14) étant situés du même côté du carter (10).

8. Dispositif d'ajustement selon l'une des revendications 1 à 7, comprenant en outre un premier câble intermédiaire (140) qui peut être entrainé par la première crémaillère (20), et un second câble intermédiaire (142) qui peut être entrainé par la seconde crémaillère (30).

9. Dispositif d'ajustement selon l'une des revendications 1 à 8, dans lequel la première crémaillère (20) comprend un espace interne (24) pour le premier câble Bowden (60, 62) ou pour un câble (141) du premier câble intermédiaire (140), et dans lequel la seconde crémaillère (30) comprend un espace intérieur (34) pour le seconde câble Bowden (70, 72) ou pour un câble (143) du second câble intermédiaire (142).

10. Dispositif d'ajustement selon l'une des revendications 1 à 9, dans lequel le carter (10) comprend une première butée (16) pour venir sélectivement en butée contre une garniture d'extrémité (61) du premier câble Bowden (60) ou contre une garniture d'arrêt (146) du premier câble intermédiaire (140), et le carter (10) comprend une seconde butée (18) pour venir sélectivement en butée contre une garniture d'extrémité (71) du second câble Bowden (70) ou contre une garniture d'arrêt (147) du second câble intermédiaire (142).

11. Dispositif d'ajustement (1) selon l'une des revendications 1 à 10, comprenant une interface (150, 160) pour le montage du dispositif d'ajustement (1) sur un fil vertical (82) ou horizontal (84) d'une armature de suspension (80), l'interface (150) étant agencée pour être mobile le long dudit fil vertical (82) ou horizontal (84) et pouvant tourner autour de ce même fil vertical (82) ou horizontal (84).

12. Dispositif d'ajustement selon la revendication 11, dans lequel l'interface (150, 160) présente une première configuration (150) pour le montage du dispositif d'ajustement (1) avec une orientation verticale par rapport au fil vertical (82) ou horizontal (84) de l'armature de suspension (80), ou présente une seconde configuration (160) pour le montage du dispositif d'ajustement (1) avec une orientation horizontale par rapport audit fil vertical (82) ou horizontal (84) de l'armature de suspension (80).

13. Dispositif d'ajustement selon l'une des revendications 11 ou 12, dans lequel l'interface (150, 160) peut être sélectivement montée sur le carter (10) du dispositif d'ajustement (1) soit avec la première configuration (150) soit avec la seconde configuration (160).

14. Dispositif d'ajustement selon l'une des revendications 11 à 13, dans lequel l'interface (150, 160) comprend des crochets (170) qui sont munis d'un réceptacle pour un fil (172) et d'au moins une paroi de verrouillage (174) qui s'étend en direction du réceptacle pour un fil (172) pour une liaison encliquetable.

15. Dispositif d'ajustement (1) selon l'une des revendications 1 à 10, dans lequel le carter (10) du dispositif d'ajustement (1) possède des pattes (12) pour le montage du dispositif d'ajustement (1) sur une armature de suspension (80) par l'intermédiaire de fixation en matière plastique (180).
